# EUROPÄISCHE PATENTSCHRIFT

(11) **EP 2 290 404 B1**
(45) Veröffentlichungstag und Bekanntmachung des Hinweises auf die Patenterteilung: **29.08.2012**
(21) Anmeldenummer: 09169024.8
(22) Anmeldetag: 31.08.2009
(51) Int. Cl.: G01T 1/29

(54) **Verfahren und Vorrichtung zum Auslesen und Löschen von in Speicherleuchstoffschichten gespeicherten Röntgeninformationen**
Method and apparatus for read-out and erasure of x-ray information stored in storage phosphor layers
Procédé et appareil de lecture et d'effacage de l'effet d'un rayonnnement X sur un écran photostimulable

(43) Veröffentlichungstag der Anmeldung: 02.03.2011
(73) Patentinhaber: Agfa HealthCare NV, 2640 Mortsel (BE)
(72) Erfinder: Mair, Stephan, D-86163 Augsburg (DE); Gerstlauer, Bernd, D-81541 München (DE); Hartmann, Thomas, D-82449 Uffing am Staffelsee (DE)
(74) Vertreter: Linsmeier, Josef

(56) Entgegenhaltungen:
- US-A- 4 687 937
- US-A- 4 816 678

## Beschreibung

Die vorliegende Erfindung betrifft ein Verfahren sowie eine entsprechende Vorrichtung zum Auslesen und Löschen von in Speicherleuchtstoffschichten gespeicherten Röntgeninformationen gemäß dem Oberbegriff von Anspruch 1 bzw. 13.

Bei der sog. Computerradiographie (CR) werden Röntgenbilder aufgenommen, indem die durch ein Objekt, beispielsweise einen Patienten, hindurchtretende Röntgenstrahlung in einer sog. Speicherleuchtstoffschicht als latentes Bild gespeichert wird. Zum Auslesen des gespeicherten Bildes wird die Speicherleuchtstoffschicht mit Stimulationslicht bestrahlt und dabei zur Aussendung von Emissionslicht angeregt. Das Emissionslicht, dessen Intensität dem in der Speicherleuchtstoffschicht gespeicherten Bild entspricht, wird von einem Detektor erfasst und in elektrische Signale umgewandelt. Die elektrischen Signale werden nach Bedarf weiterverarbeitet und schließlich für eine Auswertung, insbesondere zu medizinisch-diagnostischen Zwecken, bereitgestellt, indem sie an einem entsprechenden Ausgabegerät, wie z. B. einem Monitor oder Drucker, ausgegeben werden. Die Speicherleuchtstoffschicht wird nach dem Auslesen des gespeicherten Bildes mit Löschlicht bestrahlt, um etwaige noch verbliebene Röntgeninformationen vollständig zu löschen, und steht dann für die Aufnahme weiterer Röntgenbilder zur Verfügung.

Bei den in US 5,072,119 und EP 0 167 835 A1 beschriebenen Verfahren wird die Menge des beim Löschen auf die Speicherleuchtstoffschicht gestrahlten Löschlichts anhand des Maximalwertes der beim Auslesen der Speicherleuchtstoffschicht vom Detektor erzeugten elektrischen Signale ermittelt. Auch bei der aus US 4,786,808 bekannten Vorrichtung wird für unterschiedliche streifenförmige Bereiche der Speicherleuchtstoffschicht jeweils ein maximaler Signalwert der vom Detektor erzeugten elektrischen Signale herangezogen, um daraus die beim Löschen der streifenförmigen Bereiche jeweils verwendete Menge des Löschlichts zu ermitteln. US 4,816,678 betrifft ein Verfahren, bei dem zur Ermittlung der in einer Speicherleuchtstoffplatte gespeicherten Strahlungsenergie beim Auslesen der Speicherleuchtstoffplatte erhaltene Spannungswerte mit gemittelten Spannungswerten verglichen werden, die bei einem vorangegangenen Testlauf ermittelt wurden.

Bei den bekannten Vorrichtungen und Verfahren kann nicht in allen Anwendungsfällen gewährleistet werden, dass die beim Löschen der Speicherleuchtstoffschicht verwendete Menge des Löschlichts so niedrig wie möglich ist, um die durch das Löschlicht verursachte Wärmeentwicklung und den damit verbundenen Energieverbrauch und Materialverschleiß möglichst niedrig zu halten und die Verweildauer der Speicherleuchtstoffschicht in der Löscheinheit möglichst kurz zu halten, damit ein möglichst hoher Durchsatz von auszulesenden Speicherleuchtstoffschichten durch die Vorrichtung erreicht wird.

Es ist Aufgabe der Erfindung, ein Verfahren sowie eine entsprechende Vorrichtungen anzugeben, bei welchem bzw. welcher die Menge des Löschlichts einerseits ausreichend groß ist, um in der Speicherleuchtstoffschicht verbliebene Röntgeninformationen möglichst vollständig zu löschen, und andererseits so niedrig wie möglich ist, um eine unnötig hohe Wärmeentwicklung zu vermeiden und einen hohen Durchsatz auszulesender Speicherleuchtstoffschichten durch die Vorrichtung zu gewährleisten.

Diese Aufgabe wird durch die technische Lehre gemäß Anspruch 1 bzw. 13 gelöst. Erfindungsgemäß werden bei der Ermittlung der Menge des Löschlichts die beim Auslesen der Speicherleuchtstoffschicht die für unterschiedliche Orte in einer ersten und zweiten Dimension der Speicherleuchtstoffschicht erhaltenen Detektorsignalwerte mit für unterschiedliche Orte in nur einer Dimension der Speicherleuchtstoffschicht vorgegebenen Vergleichssignalwerten verglichen.

Die Erfindung basiert auf dem Gedanken, die beim Auslesen unterschiedlicher Orte der zweidimensionalen Speicherleuchtstoffschicht erhaltenen Detektorsignalwerte mit Vergleichssignalwerten zu vergleichen, welche für unterschiedliche Orte in nur einer der beiden Dimensionen der Speicherleuchtstoffschicht vorgegeben sind. Vorzugsweise werden die Vergleichssignalwerte vor dem Auslesen und Löschen der Speicherleuchtstoffschicht in einem separaten Kalibrierverfahren ermittelt.

Liegt die Speicherleuchtstoffschicht in einer durch die x- und γ-Achsen eines Koordinatensystems aufgespannten Ebene, so wird beim Auslesen der Speicherleuchtstoffschicht eine Vielzahl von Detektorsignalwerten erhalten, deren Höhe vom jeweiligen jeden Ort mit den Koordinaten x und y auf der Speicherleuchtstoffschicht abhängt. Diese Detektorsignalwerte werden mit Vergleichssignalwerten verglichen, die nur entlang einer Dimension der Speicherleuchtstoffschicht vorgegeben sind, d.h. entlang der x- oder γ-Richtung. Werden die Vergleichssignalwerte nur in x-Richtung vorgegeben, so werden die für Orte mit einer bestimmten x-Koordinate und verschiedenen γ-Koordinaten erhaltenen Detektorsignalwerte mit dem entsprechenden Vergleichssignalwert für diese x-Koordinate verglichen. Werden die Vergleichssignalwerte dagegen nur in γ-Richtung vorgegeben, so werden die für Orte mit einer bestimmten γ-Koordinate und verschiedenen x-Koordinaten erhaltenen Detektorsignalwerte mit dem entsprechenden Vergleichssignalwert für diese γ-Koordinate verglichen.

Durch den Vergleich der Detektorsignalwerte für unterschiedliche Orte in den beiden Dimensionen der Speicherleuchtstoffschicht mit den in nur einer Dimension der Speicherleuchtstoffschicht vorgegebenen bzw. ermittelten Vergleichssignalwerten kann auf einfache und zuverlässige Weise darauf geschlossen werden, ob eine höhere oder niedrigere Menge des Löschlichts zum Löschen der in der Speicherleuchtstoffschicht verbliebenen Röntgeninformation erforderlich bzw. ausreichend ist, um einerseits eine vollständige Löschung der verbliebenen Röntgeninformationen zu gewährleisten und andererseits eine unnötig hohe Wärmeentwicklung zu vermeiden und einen hohen Durchsatz zu gewährleisten.

In einer bevorzugten Ausgestaltung der Erfindung wird eine erste Menge des Löschlichts gewählt, wenn die Anzahl von Detektorsignalwerten, welche größer sind als die entsprechenden Vergleichssignalwerte, nicht größer ist als eine vorgegebene Anzahl, und eine zweite Menge des Löschlichts, welche höher ist als die erste Menge des Löschlichts, gewählt wird, wenn die Anzahl von Detektorsignalwerten, welche größer sind als die entsprechenden Vergleichssignalwerte, größer ist als die vorgegebene Anzahl. Hierdurch wird die höhere zweite Menge erst dann gewählt, wenn eine größere Anzahl als die vorgegebene Anzahl von Detektorsignalwerten die entsprechenden Vergleichssignalwerte überschreitet. Liegt die vorgegebene Anzahl z.B. bei 800, so wird die kleinere erste Menge des Löschlichts gewählt, wenn höchstens 800 der beim Auslesen der Speicherleuchtstoffschicht erhaltenen Detektorsignalwerte größer sind als die entsprechenden Vergleichssignalwerte. Die größere zweite Menge des Löschlichts wird dagegen gewählt, wenn mehr als 800 der beim Auslesen der Speicherleuchtstoffschicht erhaltenen Detektorsignalwerte größer sind als die entsprechenden Vergleichssignalwerte. Auf diese Weise werden solche Detektorsignalwerte, die von Störungen bei der Erfassung des Emissionslichts durch den Detektor, z.B. aufgrund von statistischen Entladungen oder Lichtblitzen, herrühren und sich als statistische Ausreißer in der erfassten Bildinformation bemerkbar machen, bei der Ermittlung der erforderlichen Löschlichtmenge eliminiert. Die Bestimmung der erforderlichen und gleichzeitig ausreichenden Menge des Löschlichts ist hierbei besonders zuverlässig.

Vorzugsweise liegt die vorgegebene Anzahl zwischen 200 und 1500, insbesondere zwischen 500 und 1000. Durch die Wahl der vorgegebenen Anzahl kann der Einfluss von Störungen bei der Erfassung des Emissionslichts gezielt, insbesondere in Abhängigkeit vom Typ der Speicherleuchtstoffschicht, der jeweiligen Anwendung und/oder der bei der jeweiligen Aufnahme verwendeten Röntgendosis, eliminiert werden, wodurch die Zuverlässigkeit bei der Ermittlung der erforderlichen Löschlichtmenge weiter erhöht wird.

In einer weiteren vorteilhaften Ausgestaltung wird die Speicherleuchtstoffschicht mit Stimulationslicht einer Simulationslichtquelle bestrahlt, durch welche ein Stimulationslichtstrahl entlang einer in der ersten Dimension verlaufenden Zeile über die Speicherleuchtstoffschicht bewegt oder die Speicherleuchtstoffschicht entlang der Zeile linienförmig beleuchtet wird, und die Speicherleuchtstoffschicht in der zweiten Dimension relativ zur Stimulationslichtquelle bewegt wird. Bei der zuerst genannten Variante handelt es sich um einen sog. Flying Spot-Scanner, welcher weiter unten noch näher beschrieben wird. Bei der zuletzt genannten Variante mit einer linienförmigen Beleuchtung der Speicherleuchtstoffschicht handelt es sich um einen sog. Zeilenscanner, welcher beispielsweise in EP 1 034 443 A1 näher beschrieben ist. Bei beiden Varianten können die Stimulationslichtquelle und der Detektor ortsfest angeordnet sein und die Speicherleuchtstoffschicht entlang der zweiten Dimension an diesen vorbei bewegt werden. Alternativ ist die Speicherleuchtstoffschicht während des Auslesens ortsfest, und die Stimulationslichtquelle und der Detektor werden entlang der zweiten Dimension an dieser vorbei transportiert. Grundsätzlich können aber auch sowohl die Speicherleuchtstoffschicht als auch Stimulationslichtquelle und Detektor gleichzeitig bewegt werden.

Bei dieser Ausgestaltung wird die erste Dimension als Fast Scan-Richtung oder Main Scan-Richtung und die zweite Dimension als Slow Scan-Richtung oder Sub Scan-Richtung bezeichnet. Vorzugsweise werden bei der Ermittlung der Menge des Löschlichts die für unterschiedliche Orte in der ersten und zweiten Dimension, d.h. in Fast Scan- und Slow Scan-Richtung, erhaltenen Detektorsignalwerte mit den für unterschiedliche Orte nur in der ersten Dimension, d.h. in Fast Scan-Richtung, vorgegebenen bzw. ermittelten Vergleichssignalwerten verglichen. Auf diese Weise werden bei der Ermittlung der Löschlichtmenge etwaige, in Fast Scan-Richtung auftretende Variationen im Verhalten des Detektors und/oder Lichtsammlers bei der Erfassung des Emissionslichts berücksichtigt. Dies ermöglicht eine besonders zuverlässige Ermittlung der erforderlichen Löschlichtmenge.

Die vorgegebenen Vergleichssignalwerte können in einem Kalibrierverfahren und/oder in einer entsprechenden Vorrichtung gemäß den Ansprüchen 6 bzw. 14 ermittelt werden. Das Kalibrierverfahren und die entsprechende Vorrichtung stehen mit dem erfindungsgemäßen Verfahren bzw. der erfindungsgemäßen Vorrichtung zum Auslesen und Löschen der in Speicherleuchtstoffschichten gespeicherten Röntgeninformationen in einer engen Beziehung und können auch selbständig und unabhängig davon, d.h. ohne das erfindungsgemäße Verfahren bzw. die erfindungsgemäße Vorrichtung, durchgeführt bzw. betrieben werden.

Das erfindungsgemäße Kalibierverfahren gemäß Anspruch 6 weist folgende Schritte auf:
- Aufzeichnung von Vergleichsinformationen in einer Speicherleuchtstoffschicht durch Bestrahlen der Speicherleuchtstoffschicht mit Röntgenstrahlung einer bestimmten, insbesondere einer im Bereich der Speicherleuchtstoffschicht konstanten, Intensität (sog. Flatfield-Aufnahme),
- Auslesen der Vergleichsinformationen durch Bestrahlen der Speicherleuchtstoffschicht mit Stimulationslicht, durch welches die Speicherleuchtstoffschicht zur Emission von Emissionslicht angeregt wird, und Erfassen des an unterschiedlichen Orten in einer ersten und zweiten Dimension der Speicherleuchtstoffschicht emittierten Emissionslichts mit einem Detektor, wobei Vergleichssignalausgangswerte für unterschiedliche Orte in der ersten und zweiten Dimension der Speicherleuchtstoffschicht erhalten werden, und
- Ermittlung der Vergleichssignalwerte für unterschiedliche Orte in nur einer Dimension der Speicherleuchtstoffschicht durch Mittelung der Vergleichssignalausgangswerte entlang der anderen Dimension der Speicherleuchtstoffschicht.

Die entsprechende Vorrichtung zur Ermittlung von Vergleichssignalwerten gemäß Anspruch 14 umfasst
- eine Röntgenstrahlungsquelle zum Bestrahlen einer Speicherleuchtstoffschicht mit Röntgenstrahlung einer bestimmten, insbesondere einer im Bereich der Speicherleuchtstoffschicht konstanten, Intensität, wobei Vergleichsinformationen in der Speicherleuchtstoffschicht aufgezeichnet werden,
- eine Ausleseeinheit zum Auslesen der Vergleichsinformationen, wobei die Ausleseeinheit eine Stimulationslichtquelle zum Bestrahlen der Speicherleuchtstoffschicht mit Stimulationslicht, durch welches die Speicherleuchtstoffschicht zur Emission von Emissionslicht angeregt wird, und einen Detektor zum Erfassen des an unterschiedlichen Orten der Speicherleuchtstoffschicht emittierten Emissionslichts umfasst, wobei entsprechende Vergleichssignalausgangswerte erhalten werden, sowie
- eine Steuerungseinheit zur Ermittlung der Vergleichssignalwerte für unterschiedliche Orte in nur einer Dimension der Speicherleuchtstoffschicht durch Mittelung der Vergleichssignalausgangswerte entlang der anderen Dimension der Speicherleuchtstoffschicht.

In einer bevorzugten Ausführung umfasst die Vorrichtung zur Ermittlung der Vergleichssignalwerte einen Speicher, in welchem die in der Steuerungseinheit ermittelten Vergleichssignalwerte gespeichert werden können, und die Steuerungseinheit ist zur Ermittlung einer Menge an Löschlicht, mit welchem eine Speicherleuchtstoffschicht zum Löschen von in der Speicherleuchtstoffschicht verbliebenen Röntgeninformationen bestrahlt wird, unter Heranziehung der im Speicher gespeicherten Vergleichssignalwerte ausgebildet.

Die Speicherleuchtstoffschicht, mit welcher das Kalibrierverfahren durchgeführt wird, braucht nicht identisch zu sein mit der Speicherleuchtstoffschicht, aus welcher die gespeicherten Röntgeninformationen ausgelesen werden. Es ist ausreichend, wenn es sich bei der Kalibrierung einerseits und beim Auslesen und Löschen andererseits um Speicherleuchtstoffschichten desselben Typs handelt.

Bei dem beschriebenen Kalibrierverfahren bzw. in der entsprechenden Vorrichtung wird das ursprünglich zweidimensionale Datenfeld der Vergleichssignalausgangswerte auf ein eindimensionales Datenfeld von Vergleichssignalswerten reduziert, welches wesentlich weniger Speicherplatz benötigt. Trotz der hohen Datenreduktion wird hierdurch dennoch eine hohe Zuverlässigkeit bei der Bestimmung der erforderlichen, kleinstmöglichen Menge des Löschlichts gewährleistet.

Vorteilhafterweise werden die Vergleichssignalwerte für unterschiedliche Orte in der ersten Dimension, insbesondere in der Fast Scan- oder Main Scan-Richtung, der Speicherleuchtstoffschicht durch Mittelung der Vergleichssignalausgangswerte entlang der zweiten Dimension, insbesondere der Slow Scan- oder Sub Scan-Richtung, ermittelt. Auf diese Weise können auch im Kalibrierverfahren etwaige, in Fast Scan-Richtung auftretende Variationen im Verhalten des Detektors und/oder Lichtsammlers bei der Erfassung des Emissionslichts berücksichtigt werden. Dies stellt eine besonders zuverlässige Ermittlung der Vergleichssignalwerte sicher und gewährleistet dadurch eine noch höhere Zuverlässigkeit bei der Ermittlung der erforderlichen Löschlichtmenge.

In einer weiteren Ausgestaltung des Verfahrens ist vorgesehen, dass die durch Mittelung entlang der zweiten Dimension erhaltenen Vergleichssignalwerte auch entlang der ersten Dimension in der Weise gemittelt werden, dass die in mehreren Abschnitten entlang der ersten Dimension liegenden Vergleichssignalwerte jeweils gemittelt werden, so dass für die Orte innerhalb der jeweiligen Abschnitte gemittelte Vergleichssignalwerte erhalten werden. Vorzugsweise werden je Abschnitt entlang der ersten Dimension zwischen 50 und 200, insbesondere zwischen 80 und 120, Vergleichssignalwerte gemittelt. Je nach Anzahl der auch entlang der ersten Dimension gemittelten Vergleichssignalwerte wird somit der für die Speicherung der gemittelten Vergleichssignalwerte erforderliche Speicherplatz um einen in der Größenordnung von 100 liegenden Faktor weiter reduziert, ohne jedoch die Zuverlässigkeit bei der Bestimmung der kleinstmöglichen Menge des Löschlichts signifikant zu beeinträchtigen.

Es ist vorteilhaft, die Vergleichssignalausgangswerte und/oder Vergleichssignalwerte durch Bildung des Medianwertes zu mitteln. Der Medianwert, auch Zentralwert genannt, gibt denjenigen Vergleichssignalausgangswert bzw. Vergleichssignalwert an, über dem die Hälfte der Vergleichssignalausgangswerte bzw. Vergleichssignalwerte und unter dem die Hälfte der Vergleichssignalausgangswerte bzw. Vergleichssignalwerte liegt. Gegenüber dem arithmetischen Mittelwert, auch Durchschnitt genannt, hat der Medianwert den Vorteil, robuster gegenüber Ausreißern, d.h. extrem abweichenden Werten, zu sein.

Darüber hinaus ist bevorzugt, dass die Vergleichssignalwerte für unterschiedliche Speicherleuchtstoffschichtentypen, z.B. Powder Image Plates (PIP) oder Needle Image Plates (NIP), und/oder radiographische Anwendungen, wie z.B. all gemeine Radiographie oder Mammographie, und/oder Röntgenstrahlendosen ermittelt werden. Auf diese Weise wird eine auf den Speicherleuchtstoffschichtentyp, die Anwendung und ggf. Röntgendosis abgestimmte und daher besonders genaue Ermittlung der Menge des Löschlichts ermöglicht.

Beim Auslesen und Löschen einer bestimmten Speicherleuchtstoffschicht wird vorzugsweise zunächst festgestellt, um welchen Speicherleuchtstoffschichtentyp und/oder um welche radiographische Anwendung es sicht handelt und/oder welche Röntgenstrahlungsdosis bei der Aufzeichnung der Röntgeninformationen verwendet wurde. Diese Feststellung erfolgt vor dem Auslese- und Löschvorgang vorzugsweise durch Abrufen von in einem elektronischen Speicher gespeicherten Informationen zum Speicherleuchtstoffschichtentyp, zur radiographischen Anwendung bzw. zur Röntgenstrahlungsdosis. Diese Informationen sind vorzugsweise in einem elektronischen Speicher gespeichert, welcher an einer Kassette, in der sich die Speicherleuchtstoffschicht befindet, oder an der Speicherleuchtstoffschicht selbst, beispielsweise an einer Trägerschicht der Speicherleuchtstoffschicht, angebracht ist.

Vorzugsweise werden beim Auslesen der in der Speicherleuchtstoffschicht gespeicherten Röntgeninformationen die erhaltenen Detektorsignalwerte auf einen vorgegebenen Detektorsignalwert gesetzt, wenn eine in der Speicherleuchtstoffschicht gespeicherte Grenzdosis an Röntgenstrahlung bzw. ein entsprechender maximaler Detektorsignalwert überschritten wird, und beim Auslesen der in der Speicherleuchtstoffschicht gespeicherten Vergleichsinformationen ein der Höhe der jeweiligen gespeicherten Dosis an Röntgenstrahlung entsprechender Vergleichssignalausgangswert ausgegeben wird, auch wenn die in der Speicherleuchtstoffschicht gespeicherte Grenzdosis an Röntgenstrahlung bzw. der entsprechende maximale Detektorsignalwert überschritten wird. Beim Auslesen der Speicherleuchtstoffschicht werden dadurch Bildinformationen nur für solche Orte erhalten, bei denen die entsprechenden Detektorsignalwerte unterhalb des maximalen Detektorsignalwertes liegen. Im Kalibrierverfahren dagegen wird bei der Ermittlung der Vergleichssignalwerte der gesamte Bereich, in welchem endliche Vergleichssignalausgangswerte erhalten werden, genutzt. Auf diese Weise werden einerseits beim Auslesen von Röntgeninformationen Bereiche des Röntgenbildes, in denen die Grenzdosis überschritten worden ist, einheitlich schwarz bzw. weiß dargestellt, und andererseits im Kalibrierverfahren dennoch eine Erfassung entsprechender, endlicher Vergleichssignalausgangswerte bei Röntgendosen, welche die Grenzdosis überschreiten, ermöglicht.

Weitere Merkmale und Vorteile der Erfindung ergeben sich aus der folgenden Beschreibung bevorzugter Ausführungsformen und Anwendungsbeispiele, wobei Bezug auf die beigefügten Figuren genommen wird. Es zeigen:
- Fig. 1: eine Vorrichtung zum Auslesen und Löschen einer Speicher- leuchtstoffschicht;
- Fig. 2: eine schematische Darstellung des Kalibrierverfahrens zur Ermitt- lung der Vergleichssignalwerte; und
- Fig. 3: ein Beispiel für einen Verlauf der Detektorsignalwerte und Ver- gleichssignalausgangswerte in Abhängigkeit von der in der Spei- cherleuchtstoffschicht gespeicherten Röntgendosis.

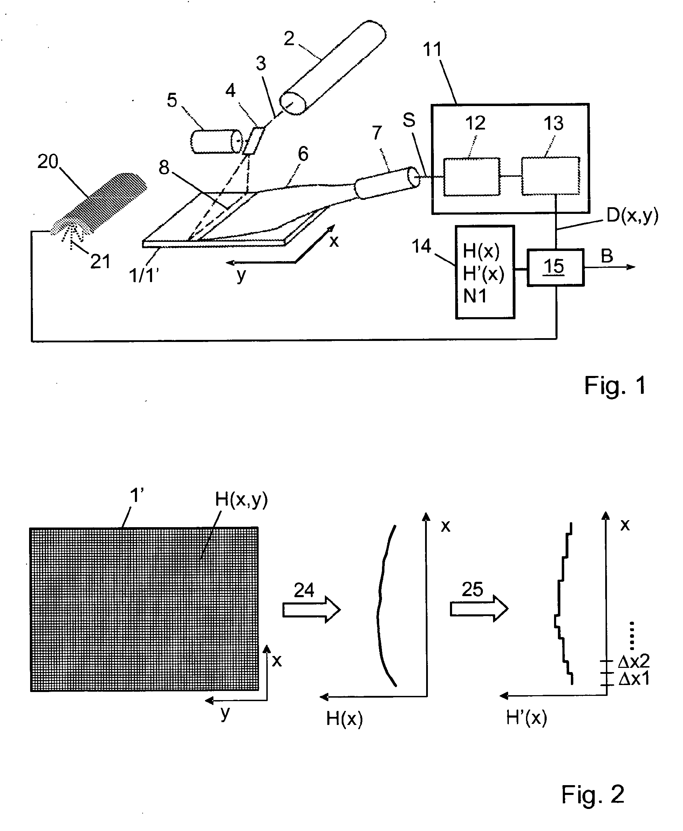

Fig. 1 zeigt eine Vorrichtung zum Auslesen und Löschen einer Speicherleuchtstoffschicht 1. Durch einen Laser 2 wird ein Stimulationslichtstrahl 3 erzeugt, welcher durch ein von einem Motor 5 in Rotation versetztes Ablenkelement 4, in diesem Fall ein rotierender Polygonspiegel, derart abgelenkt wird, dass sich dieser entlang einer in einer ersten Dimension x verlaufenden Zeile 8 über die auszulesende Speicherleuchtstoffschicht 1 bewegt. Anstelle eines Polygonspiegels kann als Ablenkelement 4 auch ein Galvanometerspiegel verwendet werden.

Während der Bewegung des Stimulationslichtstrahls 3 entlang der Zeile 8 sendet die Speicherleuchtstoffschicht 1 in Abhängigkeit der darin gespeicherten Röntgeninformation Emissionslicht aus, welches von einer optischen Sammeleinrichtung 6, beispielsweise einem Lichtleiterbündel oder einer geeigneten Abbildungsoptik, gesammelt bzw. gebündelt, weitergeleitet und von einem an die Sammeleinrichtung 6 gekoppelten Detektor 7, vorzugsweise einem Photomultiplier (PMT), erfasst und in ein entsprechendes analoges Detektorsignal S umgewandelt wird.

Das analoge Detektorsignal S wird einer Verarbeitungseinrichtung 11 zugeführt, wo es zunächst durch ein Tiefpassfilter 12 gefiltert wird, indem höherfrequente Anteile des Detektorsignals S, insbesondere Rauschanteile, eliminiert oder zumindest reduziert werden.

Das gefilterte, analoge Detektorsignal S wird einer Digitalisierungseinrichtung 13 zugeführt und dort mit einer vorgegebenen Abtastfrequenz abgetastet und digitalisiert, wobei pro Abtastvorgang ein digitaler Detektorsignalwert D erhalten wird. Die Abtastfrequenz liegt typischerweise zwischen 1 und 12 MHz. Das Abtasten des analogen Detektorsignals S in der Digitalisierungseinrichtung 13 erfolgt vorzugsweise nach dem sog. Sample and Hold-Prinzip, bei welchem die jeweils aktuelle analoge Signalhöhe des zu einem Abtastzeitpunkt an der Digitalisierungseinrichtung 13 anliegenden Detektorsignals S gehalten und in einen entsprechenden digitalen Detektorsignalwert D umgewandelt wird.

Durch eine Bewegung der Speicherleuchtstoffschicht 1 in Richtung einer zweiten Dimension y relativ zur Ausleseeinheit, welche die Stimulationslichtquelle 2, 4 und 5 sowie die optische Sammeleinrichtung 6 und den Detektor 7 umfasst, werden sukzessive einzelne, in der ersten Dimension x verlaufende Zeilen 8 der Speicherleuchtstoffschicht 1 zur Aussendung von Emissionslicht angeregt, welches vom Detektor 7 erfasst und in der Verarbeitungseinrichtung 11 in entsprechende digitale Detektorsignalwerte D umgewandelt wird. Auf diese Weise wird für eine Vielzahl von Orten (x, y) in der ersten und zweiten Dimension x bzw. y der Speicherleuchtstoffschicht 1 jeweils ein digitaler Detektorsignalwert D(x, y) erhalten.

Die erste Dimension x wird auch als x-Richtung, Fast Scan-Richtung oder Main Scan-Richtung und die zweite Dimension y auch als γ-Richtung oder Slow Scan-Richtung oder Sub Scan-Richtung bezeichnet.

Aus den in einem Speicher (nicht dargestellt) zwischengespeicherten digitalen Detektorsignalwerten D(x, y) werden schließlich in einer Steuerungseinheit 15 Bildsignalwerte B für einzelne Bildpunkte (sog. Pixel) ermittelt, indem z.B. zwei oder mehrere Detektorsignalwerte D(x, y) zu einem Bildpunkt zusammengefasst werden und daraus - vorzugsweise durch Ermittlung des Medianwertes - ein zu diesem Bildpunkt gehörender Bildsignalwert B berechnet wird. Die Gesamtheit der aus den Detektorsignalwerten D(x, y) errechneten Bildsignalwerte B bildet dann ein zweidimensionales Röntgenbild, das schließlich auf einem Monitor dargestellt oder über einen Drucker ausgegeben werden kann.

Die Vorrichtung weist eine Löscheinheit 20 auf, mit welcher die Speicherleuchtstoffschicht 1 nach dem Auslesen der darin gespeicherten Röntgeninformationen mit Löschlicht 21 bestrahlt wird, um etwaige in der Speicherleuchtstoffschicht 1 verbliebene Röntgeninformationen vollständig zu löschen. Die Löscheinheit 20 ist in dem hier gezeigten Beispiel stark schematisiert dargestellt und umfasst neben einer geeigneten Reflektoranordnung eine oder mehrere Lichtquellen, z.B. eine Lampe oder Leuchtdioden, zur Ausgabe von Löschlicht 21 in einem bestimmten Wellenlängenspektrum. Alternativ kann die Löscheinheit 20 auch Lichtquellen umfassen, die Löschlicht 21 in unterschiedlichen Wellenlängenspektren erzeugen. Weitere Ausgestaltungsmöglichkeiten der Löscheinheit 20 sind in den Veröffentlichungsschriften EP 1 895 325 A1,

EP 1 895 326 A1 und EP 1 895 327 A1 näher beschrieben.

Die Löscheinheit 20 kann in verschiedenen Positionen relativ zur Ausleseeinheit 2 und 4 bis 6 angeordnet werden. Im dargestellten Beispiel ist sie - in γ-Richtung betrachtet - nach der Ausleseeinheit 2 und 4 bis 7 angeordnet, so dass sie von der Speicherleuchtstoffschicht 1 unmittelbar nach dem Auslesen durchlaufen wird. Alternativ kann die Löscheinheit 20 - in γ-Richtung betrachtet - auch vor der Ausleseeinheit 2 und 4 bis 7 angeordnet sein, wobei die Transportrichtung der Speicherleuchtstoffschicht 1 nach dem Auslesen erst umgekehrt werden muss, damit diese die Löscheinheit 20 durchlaufen kann.

Die Vorrichtung wird in der Weise gesteuert, dass eine bestimmte Menge des Löschlichts 21, mit welchem die Speicherleuchtstoffschicht 1 während des Löschens bestrahlt wird, durch die Steuerungseinheit 15 vorgegeben wird. Die Menge des Löschlichts 21 stellt ein Maß für die während des Löschvorgangs pro Flächeneinheit auf die Speicherleuchtstoffschicht 1 treffende Lichtenergie dar. Vorzugsweise wird die Menge des Löschlichts durch die Wahl der Intensität und/oder Dauer des von der Löscheinheit 20 ausgegebenen Löschlichts 21 und/oder der Geschwindigkeit des Transports der Speicherleuchtstoffschicht 1 relativ zur Löscheinheit 20 vorgegeben.

Die beim Löschvorgang gewählte Menge des Löschlichts 21 wird in der Steuerungseinheit 15 anhand der Detektorsignalwerte D(x, y) ermittelt, indem diese mit vorgegebenen Vergleichssignalwerten H(x) oder H'(x) verglichen werden, die in einem Kalibrierverfahren für unterschiedliche Orte in nur einer Dimension der Speicherleuchtstoffschicht 1, nämlich in x-Richtung bzw. Fast Scan-Richtung, ermittelt und in einem Speicher 14 gespeichert werden. Einzelheiten des Kalibrierverfahrens werden weiter unten näher beschrieben.

Bei dem erfindungsgemäßen Verfahren zum Auslesen und Löschen werden die beim Auslesen einer in x-Richtung verlaufenden Zeile 8 bei jeweils fester γ-Position erhaltenen Detektorsignalwerte D(x, y) mit den entsprechenden, in x-Richtung verlaufenden, Vergleichssignalwerten H(x) bzw. H'(x) verglichen. Wenn hierbei ein Detektorsignalwert D(x, y) größer ist als der entsprechende Vergleichssignalwert H(x) bzw. H'(x), so wird ein Zähler N um die Zahl 1 erhöht. Dieser Vergleich wird für alle weiteren Detektorsignalwerte D(x, y), die beim Auslesen von weiteren in x-Richtung verlaufenden Zeilen 8 bei jeweils festen γ-Positionen erhalten werden, wiederholt. Auf diese Weise werden alle erhaltenen Detektorsignalwerte D(x, y) zeilenweise mit den entsprechenden Vergleichssignalwerten H(x) bzw. H'(x) verglichen.

Am Ende dieses Vergleichs wird in der Steuereinrichtung 15 überprüft, ob der Zählerstand N größer ist als eine bestimmte vorgegebene Anzahl N1, welche ebenfalls im Speicher 14 gespeichert ist. Ist dies nicht der Fall, wird eine erste Menge des Löschlichts 21 gewählt. Ist der Zählerstand N dagegen größer ist als die vorgegebene Anzahl N1, so wird eine zweite Menge des Löschlichts 21, welche größer ist als die erste Menge des Löschlichts 21, gewählt. Hierdurch wird erreicht, dass eine höhere Löschlichtmenge erst dann gewählt wird, wenn eine hinreichend große Anzahl N von Detektorsignalwerten D(x, y) größer ist als die entsprechenden Vergleichssignalwerte H(x) bzw. H'(x). Auf diese Weise werden solche Detektorsignalwerte, die von Störungen bei der Erfassung des Emissionslichts durch den Detektor 7, beispielsweise aufgrund von statistischen Entladungen oder Lichtblitzen, herrühren, bei der Ermittlung der erforderlichen Löschlichtmenge eliminiert.

Vorzugsweise liegt die vorgegebene Anzahl N1 im Bereich zwischen etwa 200 und 1500, insbesondere zwischen 500 und 1000. Durch die Vorgabe der Anzahl N1 kann der Einfluss solcher Störungen gezielt unterdrückt werden.

Bei dem erfindungsgemäßen Kalibrierverfahren wird zunächst eine Speicherleuchtstoffschicht 1' mit von einer Röntgenquelle (nicht dargestellt) erzeugten Röntgenstrahlung einer bestimmten, im Bereich der Speicherleuchtstoffschicht 1' im Wesentlichen konstanten Intensität bestrahlt. Wegen der im Wesentlichen konstanten Intensität wird eine solche Röntgenaufnahme auch als Flatfield-Aufnahme bezeichnet.

Typische Werte der Röntgenstrahlungsdosis, mit welcher die Speicherleuchtstoffschicht 1' bestrahlt wird, liegen im Bereich von etwa 100 mR oder 300 mR. Da diese Dosen wesentlich höher sind als die beim Auslesen eines Röntgenbildes üblicherweise anzutreffenden Röntgendosen von bis zu etwa 50 mR, wird die bei der Kalibrierung vorgenommene Aufzeichnung von Vergleichsinformationen in der Speicherleuchtstoffschicht 1' auch als Hochdosis-Aufnahme bezeichnet.

Die in der Speicherleuchtstoffschicht 1' gespeicherten Vergleichsinformationen werden dann entsprechend der oben bereits näher beschriebenen Weise ausgelesen, wobei ein zweidimensionales Datenfeld von Vergleichssignalausgangswerten H(x, y) für unterschiedliche Orte (x, y) auf der Speicherleuchtstoffschicht 1' erhalten wird, was im linken Teil von Fig. 2 schematisch dargestellt ist.

Die Vergleichssignalausgangswerte H(x, y) werden dann in einem ersten Schritt 24 in γ-Richtung, welche im vorliegenden Fall der Transportrichtung der Speicherleuchtstoffschicht 1 beim Auslesen, d.h. der Slow Scan-Richtung oder Sub Scan-Richtung, entspricht, gemittelt. Vorzugsweise wird hierbei aus den in γ-Richtung bei einer jeweils festen x-Koordinate erhaltenen Vergleichssignalausgangswerten H(x, y) der Medianwert ermittelt. Anstelle des Medianwertes ist prinzipiell auch jede anderen Mittelwertbildung, beispielsweise der arithmetischen Mittelwertes, möglich.

Durch die Mittelung der Vergleichssignalausgangswerte H(x, y) in γ-Richtung werden Vergleichssignalwerte H(x) erhalten, welche nur noch von der jeweiligen x-Koordinate eines Ortes auf der Speicherleuchtstoffschicht 1 abhängen. Ein Beispiel für den Verlauf der Vergleichssignalwerte H(x) in x-Richtung ist im mittleren Teil der Fig. 2 dargestellt. Das zweidimensionale Datenfeld der Vergleichssignalausgangswerte H(x, y) wird auf diese Weise auf ein eindimensionales Datenfeld von Vergleichssignalswerten H(x) reduziert, welches wesentlich weniger Speicherplatz benötigt. Trotz der hohen Datenreduktion wird hierdurch dennoch eine hohe Zuverlässigkeit bei der Bestimmung der kleinstmöglichen Menge des Löschlichts 21 gewährleistet.

Zur weiteren Reduzierung des erforderlichen Speicherplatzes kann in einem zweiten Schritt 25 vorgesehen sein, dass die Vergleichssignalwerte H(x) auch entlang der x-Richtung gemittelt werden. Vorzugsweise werden hierbei die in mehreren Abschnitten Δx1, Δx2...entlang der x-Richtung liegenden Vergleichssignalwerte H(x) jeweils gemittelt, so dass für die innerhalb der jeweiligen Abschnitte Δx1, Δx2...liegenden Orte mit einer bestimmten x-Koordinate gemittelte Vergleichssignalwerte H'(x) erhalten werden. Dies ist im rechten Teil von Fig. 2 dargestellt. Vorzugsweise werden hierbei entlang der x-Richtung zwischen 80 und 120, vorzugsweise etwa 100, Vergleichssignalwerte H(x) gemittelt. Auch bei dieser Mittelung wird vorzugsweise der Medianwert der jeweils in einem Abschnitt Δx1, Δx2...liegenden Vergleichssignalwerte H(x) gebildet. Alternativ ist grundsätzlich jede andere Mittelwertbildung, wie z.B. des arithmetischen Mittelwertes, möglich. Je nach Anzahl der entlang der x-Richtung gemittelten Vergleichssignalwerte H(x) wird auf diese Weise der für die Speicherung der gemittelten Vergleichssignalwerte H'(x) erforderliche Speicherplatz um einen in der Größenordnung von 100 liegenden Faktor weiter reduziert, ohne jedoch die Zuverlässigkeit bei der Bestimmung der kleinstmöglichen Menge des Löschlichts 21 signifikant zu beeinträchtigen.

Das beschriebene Kalibrierverfahren wird vorzugsweise herstellerseitig, d.h. bei der Herstellung und Konfiguration der erfindungsgemäßen Vorrichtung, durchgeführt. Hierbei können Vergleichssignalwerte H(x) bzw. H'(x) für unterschiedliche Speicherleuchtstoffschichten-Typen, wie z.B. sog. Powder Image Plates (PIP) oder Needle Image Plates (NIP), ermittelt werden, da deren Empfindlichkeit für Röntgenstrahlung und/oder deren Löschverhalten im Allgemeinen unterschiedlich ist. Darüber hinaus können unterschiedliche Vergleichssignalwerte H(x) bzw. H'(x) für unterschiedliche radiographische Anwendungen ermittelt werden, beispielsweise für allgemeine radiographische Anwendungen oder Mammographie. Nicht zuletzt besteht hierbei die Möglichkeit, Vergleichssignalwerte H(x) bzw. H'(x) bei unterschiedlichen Röntgenstrahlungsdosen zu ermitteln.

Beispielsweise werden bei Powder Image Plates (PIPs) Vergleichssignalwerte H(x) bzw. H'(x) für Röntgenstrahlungsdosen von 100 mR und 300 mR und für Needle Image Plates (NIPs) Vergleichssignalwerte H(x) bzw. H'(x) für nur eine Röntgenstrahlungsdosis von 100 mR ermittelt.

Die bei dem herstellerseitig durchgeführten Kalibrierverfahren ermittelten Vergleichssignalwerte H(x) bzw. H'(x) können darüber hinaus auf eine sog. Shading-Linie normiert werden. Bei dieser Shading-Linie handelt es sich um eine Kalibrierlinie, welche bei niedrigen Röntgenstrahlungsdosen von bis zu etwa 50 mR aufgenommen wurde und die Sammeleffizienz der dem Detektor 7 vorgelagerten Komponenten, insbesondere der optischen Sammeleinrichtung 6, charakterisiert. Dies hat den Vorteil, dass im Falle einer kundenseitigen Reparatur der Vorrichtung, z.B. durch Austausch von dem Detektor 7 vorgelagerten Komponenten, insbesondere der optischen Sammeleinrichtung 6, lediglich eine entsprechende neue Shading-Linie zur Verfügung gestellt zu werden braucht, anhand deren dann die im Speicher 14 gespeicherten Vergleichssignalwerte H(x) bzw. H'(x) neu berechnet werden können. Ein erneutes werksseitiges Kalibrierverfahren kann auf diese Weise entfallen.

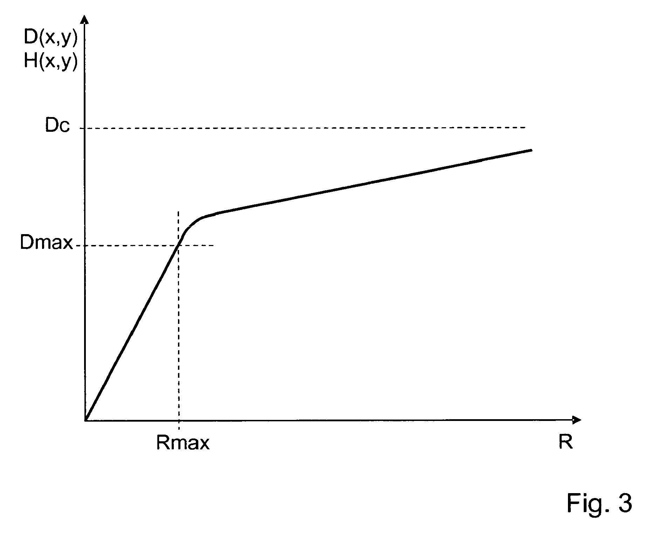

Fig. 3 zeigt ein Beispiel für einen typischen Verlauf der von dem Detektor 7 erzeugten und in der Verarbeitungseinrichtung 11 digitalisierten Detektorsignalwerte D(x, y) und Vergleichssignalausgangswerte H(x, y) in Abhängigkeit von der in der Speicherleuchtstoffschicht 1 gespeicherten Röntgendosis R.

Beim Auslesen der in der Speicherleuchtstoffschicht 1 gespeicherten Röntgeninformationen werden Detektorsignalwerte D(x, y) erhalten, welche im Wesentlichen proportional sind zur Röntgendosis R, sofern diese unterhalb einer bestimmten Grenzdosis Rmax liegt. Bei Röntgendosen oberhalb der Grenzdosis Rmax ist die Empfindlichkeit des Detektors 7 im Allgemeinen nicht mehr linear. Die hierbei erhaltenen Detektorsignalwerte D(x, y) überschreiten in solchen Fällen einen der Grenzdosis Rmax entsprechenden maximalen Detektorsignalwert Dmax und werden vorzugsweise auf einen vorgegebenen Detektorsignalwert Dc gesetzt, damit die Bereiche des erzeugten Röntgenbildes, in denen die Grenzdosis Rmax überschritten worden ist, einheitlich schwarz bzw. weiß dargestellt werden.

Im Gegensatz hierzu wird beim Auslesen der in der Speicherleuchtstoffschicht 1' gespeicherten Vergleichsinformationen, d.h. beim Kalibrierverfahren, ein der Höhe der jeweiligen gespeicherten Dosis an Röntgenstrahlung entsprechender Vergleichssignalausgangswert H(x, y) ausgegeben, auch wenn die in der Speicherleuchtstoffschicht 1' gespeicherte Grenzdosis Rmax an Röntgenstrahlung bzw. der entsprechende maximale Detektorsignalwert Dmax überschritten wird. Beim Kalibrierverfahren wird also der Detektor 7 und/oder die Verarbeitungseinrichtung 11 so gesteuert bzw. betrieben, dass im gesamten Empfindlichkeitsbereich, insbesondere auch im oberhalb der Grenzdosis Rmax bzw. des maximalen Detektorsignalwertes Dmax liegenden und im Allgemeinen nicht linearen Empfindlichkeitsbereich, Vergleichssignalausgangswerte erhalten werden können.

Dies wird in der in Fig. 1 gezeigten Vorrichtung dadurch erreicht, dass beim Kalibrierverfahren in der Digitalisierungseinrichtung 13 entweder ein separater Analog-Digital-Wandler verwendet wird, bei welchem auch oberhalb der Grenzdosis Rmax bzw. des maximalen Detektorsignalwertes Dmax Vergleichssignalausgangswerte erhalten werden, oder der bzw. die in der Digitalisierungseinrichtung 13 vorhandenen Ananlog-Digital-Wandler derart geschaltet oder betrieben werden, dass auch oberhalb der Grenzdosis Rmax bzw. des maximalen Detektorsignalwertes Dmax Vergleichssignalausgangswerte erhalten werden.

## Patentansprüche

1. Verfahren zum Auslesen und Löschen von in Speicherleuchtstoffschichten gespeicherten Röntgeninformationen mit folgenden Schritten:
- Auslesen von in einer Speicherleuchtstoffschicht (1) gespeicherten Röntgeninformationen durch Bestrahlen der Speicherleuchtstoffschicht (1) mit Stimulationslicht (3), durch welches die Speicherleuchtstoffschicht (1) zur Emission von Emissionslicht angeregt wird, und Erfassen des an unterschiedlichen Orten (x, y) der Speicherleuchtstoffschicht (1) emittierten Emissionslichts mit einem Detektor (7), wobei entsprechende Detektorsignalwerte (D(x, y)) erhalten werden, und
- Löschen von in der Speicherleuchtstoffschicht (1) verbliebenen Röntgeninformationen durch Bestrahlen der Speicherleuchtstoffschicht (1) mit Löschlicht (21), wobei die Menge des Löschlichts (21), mit welchem die Speicherleuchtstoffschicht (1) bestrahlt wird, anhand der Detektorsignalwerte (D(x, y)) ermittelt wird,
**dadurch gekennzeichnet, dass** bei der Ermittlung der Menge des Löschlichts (21) die für unterschiedliche Orte (x, y) in einer ersten und zweiten Dimension (x bzw. y) der Speicherleuchtstoffschicht (1) erhaltenen Detektorsignalwerte (D(x, y)) mit für unterschiedliche Orte (x) in nur einer Dimension (x) der Speicherleuchtstoffschicht (1) vorgegebenen Vergleichssignalwerten (H(x), H'(x)) verglichen werden.

2. Verfahren nach Anspruch 1, wobei eine erste Menge des Löschlichts (21) gewählt wird, wenn die Anzahl (N) von Detektorsignalwerten (D(x, y)), welche größer sind als die entsprechenden Vergleichssignalwerte (H(x), H'(x)), nicht größer ist als eine vorgegebene Anzahl (N1), und eine zweite Menge des Löschlichts (21), welche größer ist als die erste Menge des Löschlichts (21), gewählt wird, wenn die Anzahl (N) von Detektorsignalwerten (D(x, y)), welche größer sind als die entsprechenden Vergleich s-signalwerte (H(x), H'(x)), größer ist als die vorgegebene Anzahl (N1).

3. Verfahren nach Anspruch 2, wobei die vorgegebene Anzahl (N1) zwischen 200 und 1500, vorzugsweise zwischen 500 und 1000, liegt.

4. Verfahren nach einem der vorangehenden Ansprüche, wobei die Speicherleuchtstoffschicht (1) mit Stimulationslicht (3) bestrahlt wird, indem ein Stimulationslichtstrahl (3) entlang einer in der ersten Dimension (x) verlaufenden Zeile (8) über die Speicherleuchtstoffschicht (1) bewegt oder die Speicherleuchtstoffschicht (1) entlang der Zeile (8) linienförmig beleuchtet wird, und die Speicherleuchtstoffschicht (1) entlang der zweiten Dimension (y) bewegt wird.

5. Verfahren nach einem der vorangehenden Ansprüche, wobei bei der Ermittlung der Menge des Löschlichts (21) die für unterschiedliche Orte (x, y) in der ersten und zweiten Dimension (x bzw. y) der Speicherleuchtstoffschicht (1) erhaltenen Detektorsignalwerte (D(x, y)) mit den für unterschiedliche Orte (x oder y) nur in der ersten Dimension (x) der Speicherleuchtstoffschicht (1) vorgegebenen Vergleichssignalwerten (H(x), H'(x)) verglichen werden.

6. Verfahren nach einem der vorangehenden Ansprüche, wobei die Vergleichssignalwerte (H(x), H'(x)) in einem Verfahren mit folgenden Schritten ermittelt werden:
- Aufzeichnung von Vergleichsinformationen in einer Speicherleuchtstoffschicht (1') durch Bestrahlen der Speicherleuchtstoffschicht (1') mit Röntgenstrahlung einer bestimmten, insbesondere einer im Bereich der Speicherleuchtstoffschicht (1') konstanten, Intensität, und
- Auslesen der Vergleichsinformationen durch Bestrahlen der Speicherleuchtstoffschicht (1') mit Stimulationslicht (3), durch welches die Speicherleuchtstoffschicht (1') zur Emission von Emissionslicht angeregt wird, und Erfassen des an unterschiedlichen Orten (x, y) in einer ersten und zweiten Dimension (x bzw. y) der Speicherleuchtstoffschicht (1') emittierten Emissionslichts mit einem Detektor (7), wobei Vergleichssignalausgangswerte (H(x, y)) für unterschiedliche Orte (x, y) in der ersten und zweiten Dimension (x bzw. y) der Speicherleuchtstoffschicht (1') erhalten werden,
**dadurch gekennzeichnet, dass** Vergleichssignalwerte (H(x), H'(x)) für unterschiedliche Orte (x) in nur einer Dimension (x) der Speicherleuchtstoffschicht (1') durch Mittelung der Vergleichssignalausgangswerte (H(x, y)) entlang der anderen Dimension (y) der Speicherleuchtstoffschicht (1') ermittelt werden.

7. Verfahren nach Anspruch 6, wobei die Vergleichssignalwerte (H(x), H'(x)) für unterschiedliche Orte (x) in der ersten Dimension (x) der Speicherleuchtstoffschicht (1') durch Mittelung der Vergleichssignalausgangswerte (H(x, y)) entlang der zweiten Dimension (y) ermittelt werden.

8. Kalibrierverfahren nach Anspruch 7, wobei die in mehreren Abschnitten (Δx1, Δx2...) entlang der ersten Dimension (x) liegenden Vergleichssignalwerte (H(x)) jeweils gemittelt werden, so dass für die Orte (x) innerhalb der jeweiligen Abschnitte (Δx1, Δx2...) gemittelte Vergleichssignalwerte (H'(x)) erhalten werden.

9. Verfahren nach Anspruch 8, wobei je Abschnitt (Δx1, Δx2...) entlang der ersten Dimension (x) zwischen 50 und 200, insbesondere zwischen 80 und 120, Vergleichssignalwerte (H(x)) gemittelt werden.

10. Verfahren nach einem der Ansprüche 6 bis 9, wobei die Vergleichssignalausgangswerte (H(x, y)) und/oder Vergleichssignalwerte (H(x)) durch Bildung des Medianwertes gemittelt werden.

11. Verfahren nach einem der Ansprüche 6 bis 10, wobei Vergleichssignalwerte (H(x), H'(x)) für unterschiedliche Speicherleuchtstoffschichtentypen (PIP, NIP) und/oder Anwendungen und/oder Röntgenstrahlungsdosen (R1, R2, R) ermittelt werden.

12. Verfahren nach einem der Ansprüche 6 bis 11, wobei die beim Auslesen der in der Speicherleuchtstoffschicht (1) gespeicherten Röntgeninformationen erhaltenen Detektorsignalwerte (D(x, y)) auf einen vorgegebenen Detektorsignalwert (Dc) gesetzt werden, wenn eine in der Speicherleuchtstoffschicht (1) gespeicherte Grenzdosis (Rmax) an Röntgenstrahlung oder ein entsprechender maximaler Detektorsignalwert (Dmax) überschritten wird, und beim Auslesen der in der Speicherleuchtstoffschicht (1') gespeicherten Vergleichsinformationen ein der Höhe der jeweiligen gespeicherten Dosis an Röntgenstrahlung entsprechender Vergleichssignalausgangswert (H(x, y)) ausgegeben wird, auch wenn die in der Speicherleuchtstoffschicht (1) gespeicherte Grenzdosis (Rmax) an Röntgenstrahlung oder der entsprechende maximale Detektorsignalwert (Dmax) überschritten wird.

13. Vorrichtung zum Auslesen und Löschen von in Speicherleuchtstoffschichten gespeicherten Röntgeninformationen mit:
- einer Ausleseeinheit (2, 4 bis 7) zum Auslesen von in einer Speicherleuchtstoffschicht (1) gespeicherten Röntgeninformationen, wobei die Ausleseeinheit (2, 4 bis 7) eine Stimulationslichtquelle (2, 4, 5) zum Bestrahlen der Speicherleuchtstoffschicht (1) mit Stimulationslicht (8), durch welches die Speicherleuchtstoffschicht (1) zur Emission von Emissionslicht angeregt wird, und einen Detektor (7) zum Erfassen des an unterschiedlichen Orten (x, y) der Speicherleuchtstoffschicht (1) emittierten Emissionslichts umfasst, wobei entsprechende Detektorsignalwerte (D(x, y)) erhalten werden,
- einer Löscheinheit (20) zum Löschen von in der Speicherleuchtstoffschicht (1) verbliebenen Röntgeninformationen durch Bestrahlen der Speicherleuchtstoffschicht (1) mit Löschlicht (21) und
- einer Steuerungseinheit (15) zur Ermittlung der Menge des Löschlichts (21), mit welchem die Speicherleuchtstoffschicht (1) bestrahlt wird, anhand der Detektorsignalwerte (D(x, y)),
**dadurch gekennzeichnet, dass** die Steuerungseinheit (15) zur Ermittlung der Menge des Löschlichts (21) durch Vergleich der für unterschiedliche Orte (x, y) in einer ersten und zweiten Dimension (x bzw. y) der Speicherleuchtstoffschicht (1) erhaltenen Detektorsignalwerte (D(x, y)) mit für unterschiedliche Orte (x) in nur einer Dimension (x) der Speicherleuchtstoffschicht (1) vorgegebenen Vergleichssignalwerten (H(x), H'(x)) ausgebildet ist.

14. Vorrichtung nach Anspruch 13 mit einer Röntgenstrahlungsquelle zum Bestrahlen einer Speicherleuchtstoffschicht (1') mit Röntgenstrahlung einer bestimmten, insbesondere einer im Bereich der Speicherleuchtstoffschicht (1') konstanten, Intensität, wobei Vergleichsinformationen in der Speicherleuchtstoffschicht (1') aufgezeichnet werden, wobei
- die Ausleseeinheit (2, 4 bis 7) zum Auslesen der Vergleichsinformationen ausgebildet ist, wobei entsprechende Vergleichssignalausgangswerte (H(x, y)) erhalten werden, und
- die Steuerungseinheit (15) zur Ermittlung der Vergleichssignalwerte (H(x), H'(x)) für unterschiedliche Orte (x) in nur einer Dimension (x) der Speicherleuchtstoffschicht (1') durch Mittelung der Vergleichssignalausgangswerte (H(x, y)) entlang der anderen Dimension (y) der Speicherleuchtstoffschicht (1') ausgebildet ist.

15. Vorrichtung nach Anspruch 14 mit einem Speicher (14), in welchem die in der Steuerungseinheit (15) ermittelten Vergleichssignalwerte (H(x), H'(x)) gespeichert werden können, wobei die Steuerungseinheit (15) zur Ermittlung der Menge an Löschlicht (21), mit weichem die Speicherleuchtstoffschicht (1) zum Löschen von in der Speicherleuchtstoffschicht (1) verbliebenen Röntgeninformationen bestrahlt wird, unter Heranziehung der im Speicher (14) gespeicherten Vergleichssignalwerte (H(x), H'(x)) ausgebildet ist.

## Claims

1. A method for reading out and deleting X-ray information stored in storage phosphor layers comprising the following steps:
- reading out X-ray information stored in a storage phosphor layer (1) by irradiating the storage phosphor layer (1) with stimulation light (3) by means of which the storage phosphor layer (1) is stimulated to emit emission light, and detecting the emission light emitted at different points (x, y) of the storage phosphor layer (1) with a detector (7), corresponding detector signal values (D(x, y)) being obtained, and
- deleting X-ray information remaining in the storage phosphor layer (1) by irradiating the storage phosphor layer (1) with deleting light (21), the quantity of deleting light (21) with which the storage phosphor layer (1) is irradiated being determined by means of the detector signal values (D(x, y)),
**characterised in that** when determining the quantity of deleting light (21) the detector signal values (D(x, y)) obtained for different points (x, y) in a first and second dimension (x and y) of the storage phosphor layer (1) are compared with comparison signal values (H(x), H'(x)) pre-specified for different points (x) in just one dimension (x) of the storage phosphor layer (1).

2. The method according to Claim 1, a first quantity of deleting light (21) being chosen if the number (N) of detector signal values (D(x, y)) which are greater than the corresponding comparison signal values (H(x), H'(x)) is no greater than a pre-specified number (N1), and a second quantity of deleting light which is greater than the first quantity of deleting light (21) being chosen if the number (N) of detector signal values (D(x, y)) which are greater than the corresponding comparison signal values (H(x), H'(x)) is greater than the pre-specified number (N1).

3. The method according to Claim 2, the pre-specified number (N1) being between 200 and 1500, preferably between 500 and 1000.

4. The method according to any of the preceding claims, the storage phosphor layer (1) being irradiated with stimulation light (3) by a stimulation light beam (3) being moved over the storage phosphor layer (1) along a line (8) running in the first dimension (x), or the storage phosphor layer (1) being illuminated linearly along the line (8), and the storage phosphor layer (1) being moved along the second dimension (y)^{.}

5. The method according to any of the preceding claims, when determining the quantity of deleting iight (21) the detector signal values (D(x, y)) obtained for different points (x, y) in the first and second dimension (x or y) of the storage phosphor layer (1) being compared with the comparison signal values (H(x), H'(x)) pre-specified for different points (x or y) only in the first dimension (x) of the storage phosphor layer (1).

6. The method according to any of the preceding claims, the comparison signal values (H(x), H'(x)) being determined by a method comprising the following steps:
- recording comparison information in a storage phosphor layer (1') by irradiating the storage phosphor layer (1') with X-ray radiation of a specific intensity that is constant, in particular in the region of the storage phosphor layer (1'), and
- reading out the comparison information by irradiating the storage phosphor layer (1') with stimulation light (3) by means of which the storage phosphor layer (1') is stimulated to emit emission light, and detecting the emission light emitted at different points (x, y) in a first and second dimension (x and y) of the storage phosphor layer (1') with a detector (7), comparison signal initial values (H(x, y)) being obtained for different points (x, y) in the first and second dimension (x and y) of the storage phosphor layer (1'),
**characterised in that** comparison signal values (H(x), H'(x)) are determined for different points (x) in just one dimension (x) of the storage phosphor layer (1') by averaging the comparison signal initial values (H(x, y)) along the other dimension (y) of the storage phosphor layer (1').

7. The method according to Claim 6, the comparison signal values (H(x), H'(x)) for different points (x) in the first dimension (x) of the storage phosphor layer (1') being determined by averaging the comparison signal initial values (H(x, y)) along the second dimension (y).

8. The calibration method according to Claim 7, the comparison signal values (H(x)) lying in several sections (Δx1, Δx2...) along the first dimension (x) respectively being averaged so that comparison signal values (H'(x)) averaged for the points (x) within the respective sections (Δx1, Δx2... ) are obtained.

9. The method according to Claim 8, between 50 and 200, in particular between 80 and 120, comparison signal values (H(x)) being averaged along the first dimension (x).

10. The method according to any of Claims 6 to 9, the comparison signal initial values (H(x, y)) and/or comparison signal values (H(x)) being averaged by forming the median value.

11. The method according to any of Claims 6 to 10, comparison signal values (H(x), H'(x)) being determined for different storage phosphor layer types (PIP, NIP) and/or applications and/or X-ray radiation doses (R1, R2, R).

12. The method according to any of Claims 6 to 11, the detector signal values (D(x, y)) obtained when reading out the X-ray information stored in the storage phosphor layer (1) being set to a pre-specified detector signal value (Dc) if a limit dose (Rmax) of X-ray radiation stored in the storage phosphor layer (1) or a corresponding maximum detector signal value (Dmax) is exceeded, and when reading out the comparison information stored in the storage phosphor layer (1') a comparison signal initial value (H(x, y)) corresponding to the level of the respectively stored dose of X-ray radiation being emitted, even if the limit dose (Rmax) of X-ray radiation stored in the storage phosphor layer (1) or the corresponding maximum detector signal value (Dmax) is exceeded.

13. An apparatus for reading out and deleting X-ray information stored in storage phosphor layers comprising:
- a read-out unit (2, 4 to 7) for reading out X-ray information stored in a storage phosphor layer (1), the read-out unit (2, 4 to 7) stimulating a stimulation light source (2, 4, 5) to irradiate the storage phosphor layer (1) with stimulation light (8) by means of which the storage phosphor layer (1) is stimulated to emit emission light, and a detector (7) for detecting the emission light emitted at different points (x, y) of the storage phosphor layer (1), corresponding detector signal values (D(x, y)) being obtained,
- a deleting unit (20) for deleting X-ray information remaining in the storage phosphor layer (1) by irradiating the storage phosphor layer (1) with deleting light (21), and
- a control unit (15) for determining the quantity of deleting light (21) with which the storage phosphor layer (1) is irradiated by means of the detector signal values (D(x, y)),
**characterised in that** the control unit (15) for determining the quantity of deleting light (21) by comparing the detector signal values (D(x, y)) obtained for different points (x, y) in a first and second dimension (x and y) of the storage phosphor layer (1) is designed with comparison signal values (H(x), H'(x) pre-specified for different points (x) in just one dimension (x) of the storage phosphor layer (1).

14. The apparatus according to Claim 13 comprising an X-ray radiation source for irradiating a storage phosphor layer (1') with X-ray radiation of a specific intensity that is constant, in particular in the region of the storage phosphor layer (1'), comparison information being recorded in the storage phosphor layer (1'),
- the read-out unit (2, 4 to 7) being designed to read out the comparison information, corresponding comparison signal initial values (H(x, y)) being obtained, and
- the control unit (15) for determining the comparison signal values (H(x), H'(x)) for different points (x) in just one dimension (x) of the storage phosphor layer (1') being formed by averaging the comparison signal initial values (H(x, y)) along the other dimension (y) of the storage phosphor layer (1').

15. The apparatus according to Claim 14 comprising a memory (14) in which the comparison signal values (H(x), H'(x)) determined in the control unit (15) can be stored, the control unit (15) being designed to determine the quantity of deleting light (21) with which the storage phosphor layer (1) is irradiated in order to delete X-ray information remaining in the storage phosphor layer (1) using the comparison signal values (H(x), H'(x)) stored in the memory (14).

## Revendications

1. Procédé de lecture et d'effacement d'informations radiographiques enregistrées dans des couches photostimulables comportant les étapes suivantes :
- lecture d'informations radiographiques, enregistrées dans une couche photostimulable (1), par irradiation de la couche photostimulable (1) avec de la lumière de stimulation (3) grâce à laquelle la couche photostimulable (1) est stimulée pour émettre de la lumière d'émission, et captage de la lumière d'émission émise en divers emplacements (x, y) de la couche photostimulable (1) à l'aide d'un détecteur (7), moyennant quoi l'on obtient des valeurs de signal de détecteur (D(x, y)) correspondantes, et
- effacement des informations radiographiques restant dans la couche photostimulable (1) par irradiation de la couche photostimulable (1) avec de la lumière d'effacement (21), la quantité de la lumière d'effacement (21) avec laquelle la couche photostimulable (1) est irradiée étant déterminée à l'aide des valeurs de signal de détecteur (D(x, y)),
**caractérisé en ce que**, lors de la détermination de la quantité de la lumière d'effacement (21), les valeurs de signal de détecteur (D(x, y)) obtenues pour divers emplacements (x, y) dans une première et une deuxième dimension (x et y) de la couche photostimulable (1) sont comparées à des valeurs de signal de comparaison (H(x), H'(x)) prédéfinies pour divers emplacements (x) dans une seule dimension (x) de la couche photostimulable (1).

2. Procédé selon la revendication 1, dans lequel une première quantité de lumière d'effacement (21) est choisie lorsque le nombre (N) de valeurs de signal de détecteur (D(x, y)) qui dépassent les valeurs de signal de comparaison (H(x), H'(x)) correspondantes n'est pas plus important qu'un nombre prédéfini (N1), et une deuxième quantité de lumière d'effacement (21), plus grande que la première quantité de la lumière d'effacement (21), est choisie lorsque le nombre (N) de valeurs de signal de détecteur (D(x, y)) qui dépassent les valeurs de signal de comparaison (H(x), H'(x)) correspondantes est plus important que le nombre prédéfini (N1).

3. Procédé selon la revendication 2, dans lequel le nombre prédéfini (N1) se situe entre 200 et 1500, de préférence entre 500 et 1000.

4. Procédé selon l'une des revendications précédentes, dans lequel la couche photostimulable (1) est irradiée avec de la lumière de stimulation (3) en faisant passer, sur la couche photostimulable (1), un faisceau de lumière de stimulation (3) le long d'une ligne (8) se prolongeant dans une première dimension (x) ou bien en illuminant de façon linéaire la couche photostimulable (1) le long de la ligne (8), et la couche photostimulable (1) est déplacée le long de la deuxième dimension (y).

5. Procédé selon l'une des revendications précédentes, dans lequel, lors de la détermination de la quantité de la lumière d'effacement (21), les valeurs de signal de détecteur (D(x, y)) relatives à divers emplacements (x, y) qui ont été obtenues dans la première et deuxième dimension (x et y) de la couche photostimulable (1) sont comparées aux valeurs de signal de comparaison (H(x), H'(x)) prédéterminées relatives à divers emplacements (x ou y) uniquement dans la première dimension (x) de la couche photostimulable (1).

6. Procédé selon l'une des revendications précédentes, dans lequel les valeurs de signal de comparaison (H(x), H'(x)) sont déterminées dans un procédé comportant les étapes suivantes :
- enregistrement d'informations de comparaison dans une couche photostimulable (1') par irradiation de la couche photostimulable (1') avec un rayonnement X d'une intensité spécifique, notamment constante dans la zone de la couche photostimulable (1'), et
- lecture des informations de comparaison par irradiation de la couche photostimulable (1') avec de la lumière de stimulation (3), grâce à laquelle la couche photostimulable (1') est stimulée pour émettre de la lumière d'émission, et captage de la lumière d'émission, émise au niveau de divers emplacements (x, y) dans une première et une deuxième dimension (x et y) de la couche photostimulable (1'), au moyen d'un détecteur (7), moyennant quoi on obtient les valeurs de sortie des signaux de comparaison (H(x, y)) relatives aux divers emplacements (x, y) dans la première et la deuxième dimension (x et y) de la couche photostimulable (1'),
**caractérisé en ce que** des valeurs de signal de comparaison (H(x), H'(x)) relatives à divers emplacements (x) dans une seule dimension (x) de la couche photostimulable (1') sont déterminées par moyennation des valeurs de sortie des signaux de comparaison (H(x, y)) le long de l'autre dimension (y) de la couche photostimulable (1').

7. Procédé selon la revendication 6, dans lequel les valeurs de signal de comparaison (H(x), H'(x)) relatives à divers emplacements (x) dans la première dimension (x) de la couche photostimulable (1') sont déterminées par moyennation des valeurs de sortie des signaux de comparaison (H(x, y)) le long de la deuxième dimension (y).

8. Procédé de calibrage selon la revendication 7, dans lequel les valeurs de signal de comparaison (H(x)) situées dans plusieurs sections (Δx1, Δx2...) le long de la première dimension (x) sont respectivement moyennées de manière à produire des valeurs de signal de comparaison (H'(x)) moyennées relatives aux emplacements (x) des sections (Δx1, Δx2... respectives.

9. Procédé selon la revendication 8, dans lequel, pour chaque section (Δx1, Δx2...) située le long de la première dimension (x), on effectue la moyennation de 50 à 200 et notamment de 80 à 120 valeurs de signal de comparaison (H(x)).

10. Procédé selon l'une des revendications 6 à 9, dans lequel on effectue la moyennation des valeurs de sortie des signaux de comparaison (H(x, y)) et/ou des valeurs de signal de comparaison (H(x)) par constitution de la valeur médiane.

11. Procédé selon l'une des revendications 6 à 10, dans lequel on effectue la moyennation des valeurs de signal de comparaison (H(x), H'(x)) relatives à différents types de couches photostimulables (PIP, NIP) et/ou différentes applications et/ou différentes doses de rayonnement X (R1, R2, R).

12. Procédé selon l'une des revendications 6 à 11, dans lequel les valeurs de signal de détecteur (D(x, y)) obtenues lors de la lecture des informations radiographiques enregistrées dans la couche photostimulable (1) sont réglées sur une valeur de signal de détecteur (Dc) prédéterminée lorsqu'une dose limite (Rmax) de rayonnement X enregistrée dans la couche photostimulable (1) ou qu'une valeur de signal de détecteur maximale (Dmax) correspondante est dépassée, et, lors de la lecture des informations de comparaison enregistrées dans la couche photostimulable (1'), une valeur de sortie du signal de comparaison (H(x, y)) correspondant à la hauteur de la dose respectivement enregistrée de rayonnement X est émise, même lorsque la dose limite (Rmax) de rayonnement X enregistrée dans la couche photostimulable (1) ou que la valeur de signal de détecteur maximale (Dmax) correspondante est dépassée.

13. Dispositif de lecture et d'effacement d'informations radiographiques enregistrées dans des couches photostimulables comportant :
- une unité de lecture (2, 4 à 7) destinée à lire les informations radiographiques enregistrées dans une couche photostimulable (1), l'unité de lecture (2, 4 à 7) comportant une source de lumière de stimulation (2, 4, 5) destinée à irradier la couche photostimulable (1) avec de la lumière de stimulation (8) grâce à laquelle la couche photostimulable (1) est stimulée pour émettre de la lumière d'émission, et un détecteur (7) destiné à capter la lumière d'émission émise en divers emplacements (x, y) de la couche photostimulable (1), moyennant quoi l'on obtient des valeurs de signal de détecteur (D(x, y)) correspondantes,
- une unité d'effacement (20) destinée à effacer les informations radiographiques restant dans la couche photostimulable (1) en irradiant la couche photostimulable (1) avec de la lumière d'effacement (21), et
- une unité de commande (15) destinée à déterminer la quantité de lumière d'effacement (21), avec laquelle la couche photostimulable (1) est irradiée, à l'aide des valeurs de signal de détecteur (D(x, y)),
**caractérisé en ce que** l'unité de commande (15) est conçue pour déterminer la quantity de la lumière d'effacement (21) en effectuant une comparaison entre les valeurs de signal de détecteur (D(x, y)) obtenues pour divers emplacements (x, y) dans une première et deuxième dimension (x et y) de la couche photostimulable (1) et les valeurs de signal de comparaison (H(x), H'(x)) prédéterminées pour divers emplacements (x) dans une seule dimension (x) de la couche photostimulable (1).

14. Dispositif selon la revendication 13, comportant une source de rayonnement X destinée à irradier une couche photostimulable (1') avec un rayonnement X d'une intensité spécifique, notamment constante dans la zone de la couche photostimulable (1'), dans lequel des informations de comparaison sont registrées dans la couche photostimulable (1'), dans lequel
- l'unité de lecture (2, 4 à 7) est conçue pour lire les informations de comparaison, moyennant quoi l'on obtient des valeurs de sortie des signaux de comparaison (H(x, y)) correspondantes, et
- l'unité de commande (15) est conçue pour déterminer les valeurs de signal de comparaison (H(x), H'(x)) pour divers emplacements (x) dans une seule dimension (x) de la couche photostimulable (1') par moyennation des valeurs de sortie des signaux de comparaison (H(x, y)) le long de l'autre dimension (y) de la couche photostimulable (1').

15. Dispositif selon la revendication 14, comportant une mémoire (14), dans laquelle les valeurs de signal de comparaison (H(x), H'(x)) déterminées dans l'unité de commande (15) peuvent être enregistrées, l'unité de commande (15) étant conçue pour déterminer la quantité de lumière d'effacement (21) avec laquelle irradier une couche photostimulable (1) pour effacer les informations radiographiques restant dans la couche photostimulable (1) en exploitant les valeurs de signal de comparaison (H(x), H'(x)) enregistrées dans la mémoire (14).
